# EUROPÄISCHE PATENTSCHRIFT

(11) **EP 3 803 228 B1**
(45) Veröffentlichungstag und Bekanntmachung des Hinweises auf die Patenterteilung: **05.10.2022**
(21) Anmeldenummer: 19729724.5
(22) Anmeldetag: 06.06.2019
(51) Int. Cl.: F24S 25/13, F24S 25/16, F24S 25/65

(54) **MONTAGESYSTEM ZUR MONTAGE VON PHOTOVOLTAIKMODULEN AUF DÄCHERN, MIT DURCH RASTVERBINDUNGEN VERBUNDENEN MONTAGESYSTEM-KOMPONENTEN**
ASSEMBLY SYSTEM FOR ASSEMBLING PHOTOVOLTAIC MODULES ON ROOFS, COMPRISING ASSEMBLY SYSTEM COMPONENTS WHICH ARE CONNECTED BY LATCHING CONNECTIONS
SYSTÈME DE MONTAGE POUR MONTER DES MODULES PHOTOVOLTAÏQUES SUR DES TOITS, COMPRENANT DES COMPOSANTS DE SYSTÈME DE MONTAGE RELIÉS PAR DES MOYENS D'ASSEMBLAGE PAR ENCLIQUETAGE

(30) Priorität: 08.06.2018 DE 202018103244 U
(43) Veröffentlichungstag der Anmeldung: 14.04.2021
(73) Patentinhaber: Premium Mounting Technologies GmbH & Co. KG, 95365 Rugendorf (DE)
(72) Erfinder: GRASS, Peter, 96317 Kronach (DE)
(74) Vertreter: Jannig & Repkow Patentanwälte PartG mbB
(86) Internationale Anmeldenummer: PCT/EP2019/064798
(87) Internationale Veröffentlichungsnummer: WO 2019/234159

(56) Entgegenhaltungen:
- EP-A1- 2 333 453
- EP-A1- 2 362 161
- DE-U1-202006 018 426

## Beschreibung

Die vorliegende Erfindung betrifft eine Vorrichtung gemäß dem Oberbegriff des Patentanspruchs 1, das heißt ein Montagesystem zur Montage von Photovoltaikmodulen auf Dächern, insbesondere auf Flachdächern.

Photovoltaikmodule wandeln bekanntlich das Licht der Sonne direkt in elektrische Energie um. Es handelt sich im Allgemeinen um rechteckförmige Platten, die häufig auf Dächern von Gebäuden montiert sind.

Bekannte Montagesysteme zur Montage von Photovoltaikmodulen auf Dächern umfassen:
- direkt auf dem Dach oder einer darauf aufgelegten Schutzmatte anzuordnende Bodenschienen, die meistens durch Hohlkammerprofile aus Aluminium gebildet werden,
- auf den Bodenschienen montierbare Stützelemente, an welchen die Photovoltaikmodule und/oder sonstige Photovoltaikanlagen-Komponenten anbringbar sind, und
- Befestigungsvorrichtungen, beispielsweise in Form von Klemmen, zur Befestigung der Photovoltaikmodule und/oder sonstiger Photovoltaikanlagen-Komponenten an den Stützelementen.

Bei Bedarf können ferner quer zu den Bodenschienen verlaufende Querstreben, Kabelkanäle, Windschutzbleche, Ballaststeine, Ballaststoffwannen etc. vorgesehen werden.

Zumindest bei Flachdächern werden vorzugsweise unterschiedliche hohe Stützelemente verwendet, sodass die darauf angebrachten Photovoltaikmodule wunschgemäß gegenüber der Horizontalen geneigt und so besser zur Sonne ausgerichtet werden können.

Ein wesentlicher Aspekt eines Montagesystems für Photovoltaikanlagen besteht darin, wie die einzelnen Montagesystem-Komponenten miteinander zu verbinden sind. Die miteinander zu verbindenden Komponenten müssen aus nachvollziehbaren Gründen möglichst einfach, schnell und sicher in ihrer bestimmungsgemäßen Relativlage miteinander verbindbar sein.

Vorliegend interessieren vor allem die Verbindungen zwischen den Bodenschienen und den Stützelementen. Hierfür kommen häufig Rastverbindungen zum Einsatz. Solche Rastverbindungen lassen sich im Allgemeinen schnell, jedenfalls schneller als beispielsweise Schraubverbindungen herstellen. Allerdings kann es bei den bekannten Verbindungssystemen unter ungünstigen Bedingungen ein Problem mit der Sicherheit der Verbindungen geben. Insbesondere wenn beispielsweise die Bodenschiene und / oder das daran anzubringende Stützelement aus welchem Grund auch immer verformt sind, kann es geschehen, dass sich zwischen diesen keine ordnungsgemäße Rastverbindung herstellen lässt. Außerdem weisen die bei der Rastverbindung miteinander in Eingriff zu bringenden Abschnitte der miteinander zu verbindenden Montagesystem-Komponenten zumindest teilweise einen komplexen Aufbau auf und müssen mit sehr geringen Toleranzen hergestellt werden.

DE 20 2006 018426 U1 offenbart ein Montagesystem zur Montage von Photovoltaikmodulen gemäß dem Oberbegriff des Anspruchs 1. EP 2 362 161 A1 und EP 2 333 453 A1 offenbaren andere Montagesysteme zur Montage von Photovoltaikmodulen.

Der vorliegenden Erfindung liegt daher die Aufgabe zugrunde, das Montagesystem gemäß dem Oberbegriff des Patentanspruchs 1 derart weiterzubilden, dass über Rastverbindungen miteinander zu verbindende Bodenschienen und Stützelemente einen einfachen Aufbau aufweisen und einfach, schnell und sicher in ihrer bestimmungsgemäßen Relativlage miteinander verbindbar sind.

Diese Aufgabe wird erfindungsgemäß durch das in Patentanspruch 1 beanspruchte Montagesystem gelöst.

Das erfindungsgemäße Montagesystem zeichnet sich dadurch aus,
- dass die Bodenschienen zumindest teilweise an ihrer Oberseite eine durch Einschnitte in der Oberseite gebildete Zunge aufweisen, deren freies Ende elastisch in die Bodenschiene hineindrückbar ist,
- dass ein Stützelement, das dazu ausgelegt ist, mit einer solchen Bodenschiene über eine unter Mitwirkung der elastischen Zunge erfolgende Rastverbindung verbunden zu werden, einen von seiner der Bodenschiene zuzuwendenden Unterseite abgehenden hakenförmigen Fortsatz aufweist, welcher einen sich vom Stützelement senkrecht nach unten erstreckenden vertikalen Schenkel und einen sich daran anschließenden, in Längsrichtung der Bodenschiene verlaufenden horizontalen Schenkel umfasst, und
- dass die Bodenschiene und das Stützelement ferner so ausgebildet sind, dass die Zunge durch den hakenförmigen Fortsatz elastisch in die Bodenschiene hineindrückbar ist und nach einem sich daran anschließenden Verschieben des Stützelements in seine bestimmungsgemäße Relativlage in Bezug zur Bodenschiene zurückspringt.

Die Vorkehrungen, die bei einem derartigen Montagesystem zur Herstellung einer Rastverbindung zwischen den miteinander zu verbindenden Montagesystem-Komponenten zu treffen sind, erfordern einen äußerst geringen Aufwand. Es muss lediglich am Stützelement ein denkbar einfach aufgebauter hakenförmiger Fortsatz vorgesehen werden, und an der Bodenschiene eine elastisch in diese hineindrückbare Zunge, wobei es weder beim Stützelement noch bei der Bodenschiene auf die Einhaltung enger Toleranzen bei der Herstellung ankommt.

Der einfache Aufbau der an der Verbindung beteiligten Abschnitte der miteinander zu verbindenden Montagesystem-Komponenten ermöglicht auch eine einfache und schnelle Herstellung der Verbindung. Dies gilt erkennbar auch dann, wenn die an der Verbindung beteiligten Abschnitte nicht mit höchster Präzision gefertigt sind und/oder die miteinander zu verbindenden Montagesystem-Komponenten Verformungen aufweisen. Das beanspruchte Rastsystem ist sehr fehlertolerant.

Bildet man die Zunge so lang aus, dass deren hinteres Ende auch noch dann sichtbar ist, wenn das Stützelement auf der Bodenschiene montiert ist, dann kann man an der Stellung des sichtbaren Zungenteils sogar optisch erkennen, ob die Zunge wieder zurück nach oben gesprungen ist, also ob eine ordnungsgemäße Verbindung vorliegt.

Vorteilhafte Weiterbildungen der Erfindung sind der folgenden Beschreibung, den Figuren, und den Unteransprüchen entnehmbar.

Die Erfindung wird nachfolgend anhand von Ausführungsbeispielen unter Bezugnahme auf die Figuren näher erläutert. Es zeigen
- Figur 1A: eine perspektivische Ansicht eines ersten Ausführungsbeispiels einer Photovoltaikanlage mit einem im Folgenden näher beschriebenen Montagesystem,
- Figur 1B: eine vergrößerte Ansicht eines Teils der in der Figur 1A gezeigten Photovoltaikanlage,
- Figur 1C: eine Seitenansicht eines Teils der in den Figuren 1A und 1B gezeigten Photovoltaikanlage,
- Figur 2A: eine perspektivische Ansicht eines zweiten Ausführungsbeispiels einer Photovoltaikanlage mit einem im Folgenden näher beschriebenen Montagesystem,
- Figur 2B: eine vergrößerte Ansicht eines Teils der in der Figur 2A gezeigten Photovoltaikanlage,
- Figur 2C: eine Seitenansicht des in der Figur 2B gezeigten Teils der Photovoltaikanlage,
- Figur 3A: eine Seitenansicht eines der Stützelemente der in den Figuren 1 und 2 gezeigten Montagesysteme,
- Figur 3B: eine perspektivische Ansicht des in der Figur 3A gezeigten Stützelements,
- Figur 4A: eine Seitenansicht eines anderen Stützelements der in den Figuren 1 und 2 gezeigten Montagesysteme,
- Figur 4B: eine perspektivische Ansicht des in der Figur 4A gezeigten Stützelements,
- Figur 5: eine Draufsicht auf eine Bodenschiene der in den Figuren 1 und 2 gezeigten Montagesysteme,
- Figur 6A: eine Schnittdarstellung eines Stützelements gemäß den Figuren 4A und 4B und einer Bodenschiene gemäß Figur 5 in einem vor der Verbindungsherstellung befindlichen getrennten Zustand,
- Figur 6F: eine Schnittdarstellung des Stützelements und der Bodenschiene gemäß Figur 6A im bestimmungsgemäß miteinander verbundenen Zustand, und
- Figuren: 6B bis 6E verschiedenen Stadien der Herstellung der bestimmungsgemäßen Verbindung gemäß Figur 6F.

Das im Folgenden näher beschriebene Montagesystem ist ein Montagesystem zur Montage von Photovoltaikmodulen auf Flachdächern. Das Montagesystem kann jedoch unverändert auch auf Dächern mit einer geringen Neigung bis beispielsweise 5° zum Einsatz kommen, und bei einer entsprechenden Anpassung an die gegebenen Verhältnisse sogar auch bei noch stärker geneigten Dächern.

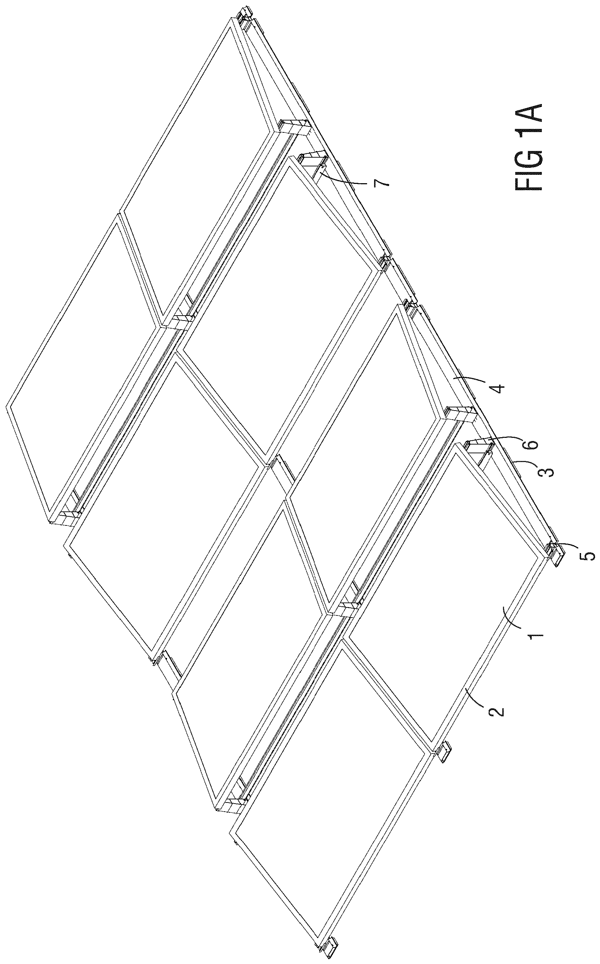

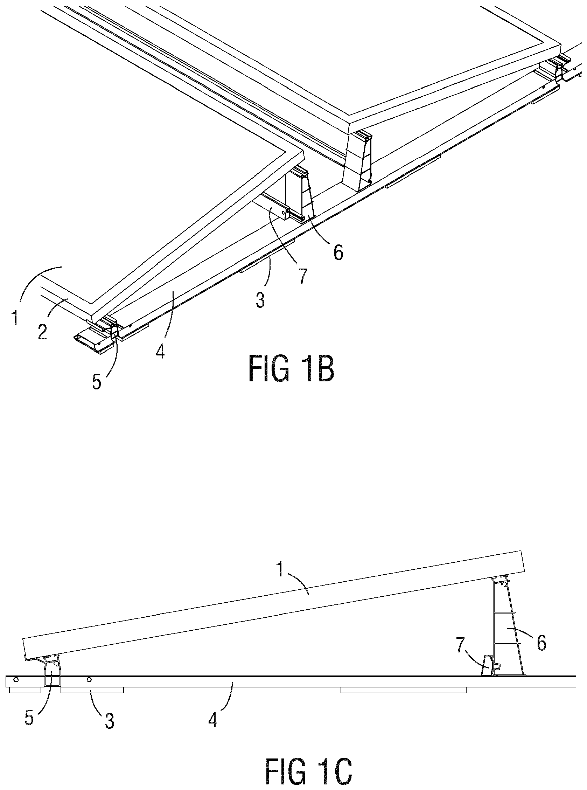

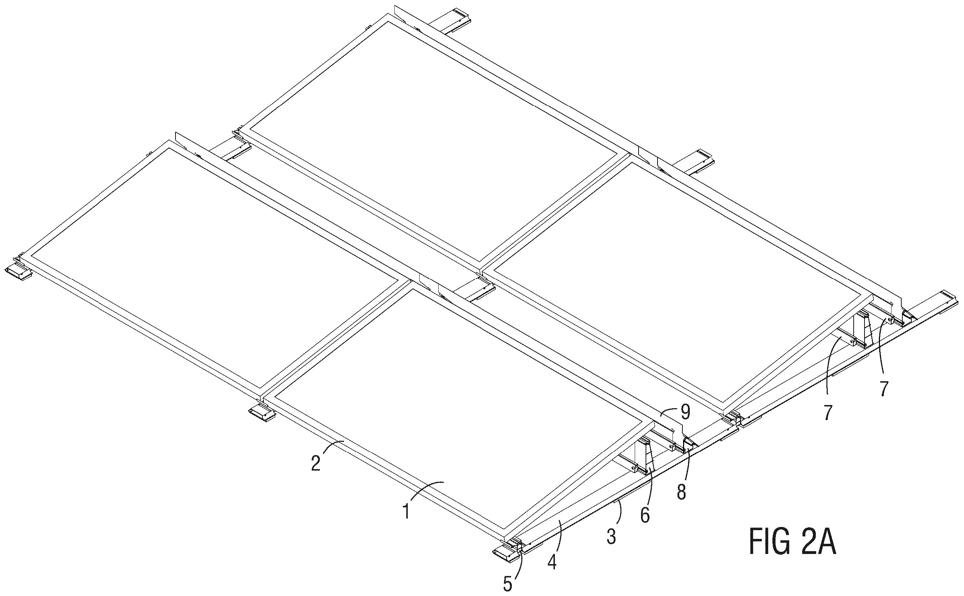

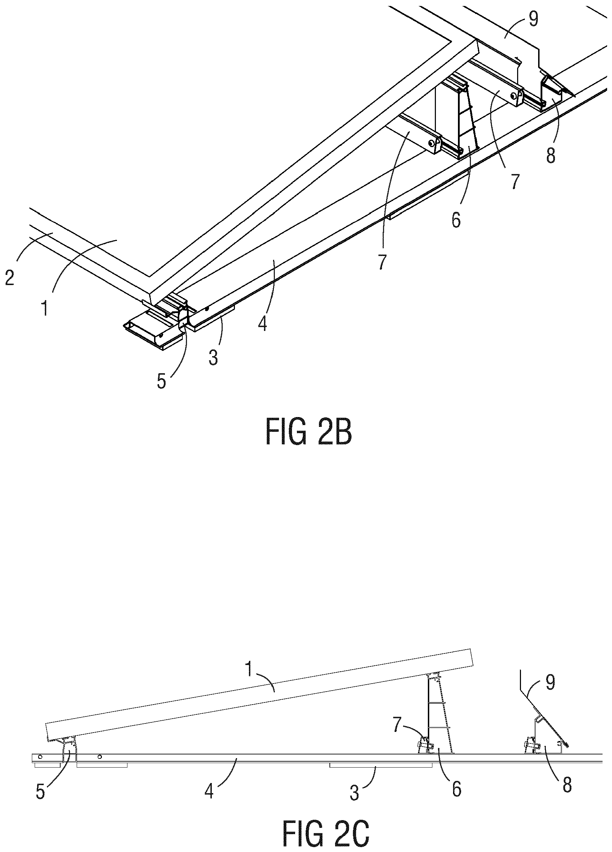

Das hier vorgestellte Montagesystem lässt sich für unterschiedlich aufgebaute Photovoltaikanlagen verwenden. Die Figuren 1A bis 1C veranschaulichen den Einsatz des Montagesystems in einer ersten Photovoltaikanlage, und die Figuren 2A bis 2C veranschaulichen den Einsatz des Montagesystems in einer zweiten Photovoltaikanlage.

Es wird nun zunächst unter Bezugnahme auf die Figuren 1A bis 1C die erste Photovoltaikanlage beschrieben. Die unter Verwendung des Montagesystems auf dem Dach zu montierenden Photovoltaik-Module sind in den Figuren mit dem Bezugszeichen 1 bezeichnet. Die Photovoltaikmodule 1 sind rechteckige Platten mit einem diese seitlich umlaufenden, beispielsweise aus Aluminium gefertigten Rahmen 2. Das die Photovoltaikmodule 1 tragende Montagesystem umfasst bei dem in den Figuren 1A bis 1C gezeigten Beispiel eine auf das Dach aufgelegte Schutzmatte oder Schutzmatten-Streifen 3, mit der Schutzmatte 3 verklebte Bodenschienen 4, an den Bodenschienen 4 angebrachte erste (niedrige) Stützelemente 5 und zweite (hohe) Stützelemente 6, und an den zweiten Stützelementen 6 befestigte und rechtwinklig zu den Bodenschienen 4 verlaufende Querstreben 7.

Bei Bedarf können ferner Kabelkanäle, Windschutzbleche, Ballaststeine, Ballaststoffwannen und/oder sonstige Photovoltaikanlagen-Komponenten vorgesehen werden.

Die Stützelemente 5, 6 dienen als Auflage für die Photovoltaikmodule 1. Die Photovoltaikmodule 1 werden durch in den Figuren nicht gezeigte Klemmen an den Stützelementen 5, 6 befestigt. Durch die Verwendung von unterschiedlich hohen Stützelementen 5, 6 als Auflage für die Photovoltaikmodule 1 sind die Photovoltaikmodule gegenüber der Horizontalen geneigt und können so besser zur Sonne hin ausgerichtet werden.

Die Bodenschienen 4 werden durch Hohlkammerprofile gebildet.

Die Bodenschienen 4, die Stützelemente 5 und 6, und die Querstreben 7 bestehen im betrachteten Beispiel aus Aluminium, könnten aber auch aus einem anderen Metall oder einem sonstigen Material bestehen.

Die in den Figuren 2A bis 2C gezeigte zweite Photovoltaikanlage entspricht großteils der ersten Photovoltaikanlage. Mit denselben Bezugszeichen bezeichnete Komponenten sind identische oder einander entsprechende Komponenten. Allerdings sind die Photovoltaikmodule anders ausgerichtet, und ist zusätzlich ein Windschutz vorgesehen.

Das Montagesystem für die zweite Photovoltaikanlage umfasst ebenfalls Schutzmatten oder Schutzmatten-Streifen 3, Bodenschienen 4, erste (niedrige) Stützelemente 5, zweite (hohe) Stützelemente 6, und Querstreben 7, welche wie die mit den entsprechenden Bezugszeichen bezeichneten Komponenten des Montagesystems für die in den Figuren 1A bis 1C gezeigte erste Photovoltaikanlage aufgebaut und angeordnet sind.

Zusätzlich umfasst das Montagesystem für die zweite Photovoltaikanlage an den Bodenschienen 4 angebrachte dritte Stützelemente 8, an welchen ein Windschutzblech 9 und weitere Querstreben 7 angebracht sind.

Vorliegend interessieren von den genannten Montagesystem-Komponenten insbesondere das zweite Stützelement 6 und das dritte Stützelement 8, genauer gesagt deren Verbindung mit den Bodenschienen 4 und die eine solche Verbindung ermöglichenden Besonderheiten der Stützelemente 6, 8 und der Bodenschienen 4.

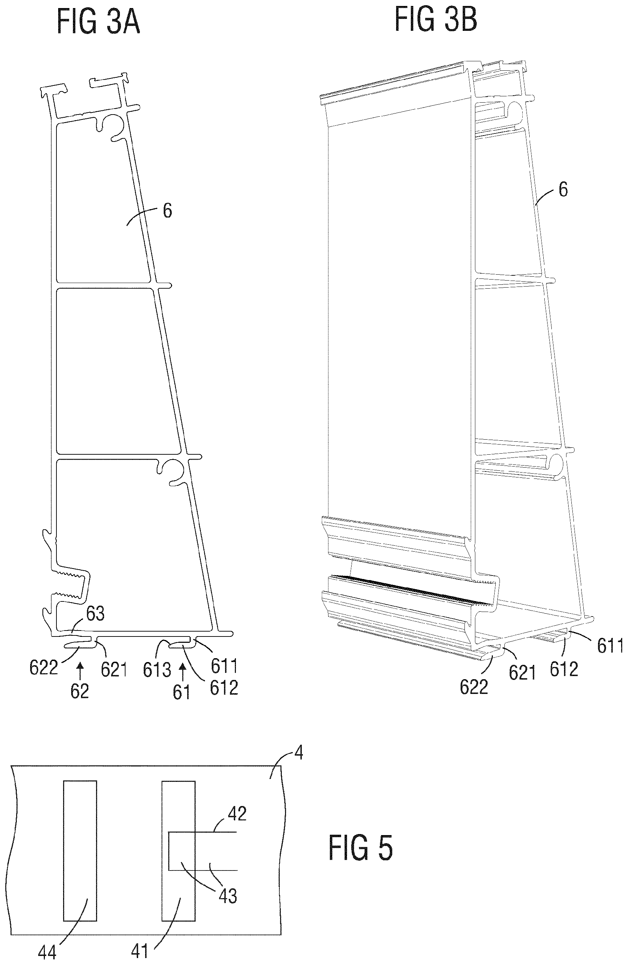

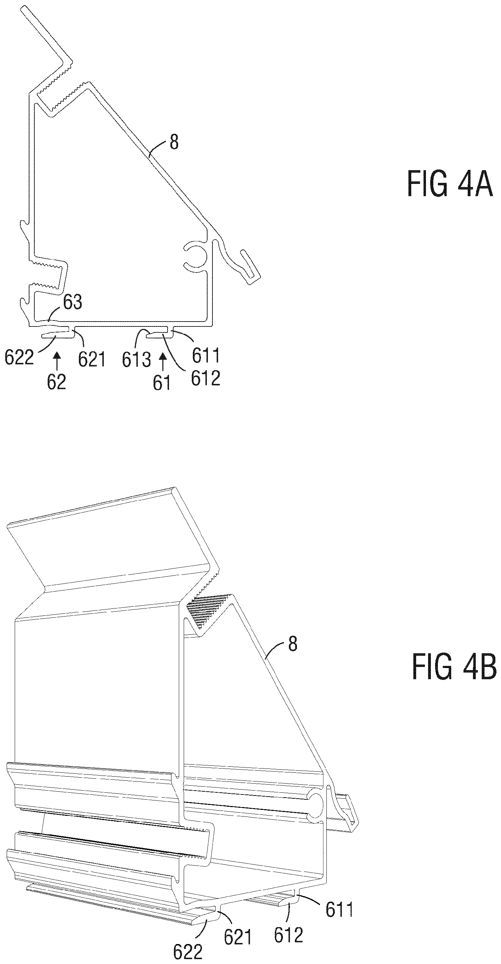

Das zweite Stützelement 6 ist nochmals groß in der Figur 3A (Seitenansicht) und 3B (perspektivische Ansicht) gezeigt, das dritte Stützelement 8 in Figur 4A (Seitenansicht) und 4B (perspektivische Ansicht), und die Bodenschiene, genauer gesagt eine Draufsicht auf diese in Figur 5.

Der Vollständigkeit halber sei angemerkt, dass an den Stützelementen 6, 8 nicht nur Photovoltaikmodule 1 oder Windschutzbleche 9 angebracht werden können, sondern auch beliebige andere Photovoltaikanlagen-Komponenten.

Eine der Besonderheiten der Stützelemente 6, 8 besteht darin, dass sie durch eine spezielle Rastverbindung mit den Bodenschienen 4 verbindbar sind. Zwar ist im betrachteten Beispiel auch das erste Stützelement 5 durch eine Rastverbindung mit den Bodenschienen 4 verbindbar, doch kommt dort ein anderer, vorliegend nicht interessierender Rastmechanismus zum Einsatz.

Um die Stützelemente 6, 8 durch die spezielle Rastverbindung mit den Bodenschienen 4 verbinden zu können, sind diese so ausgebildet,
- dass die Bodenschienen 4 zumindest teilweise an ihrer Oberseite eine durch Einschnitte 42 in der Oberseite gebildete Zunge 43 aufweisen, deren freies Ende elastisch in die Bodenschiene 4 hineindrückbar ist,
- dass ein Stützelement 6, 8, das dazu ausgelegt ist, mit einer solchen Bodenschiene 4 über eine unter Mitwirkung der elastischen Zunge 43 erfolgende Rastverbindung verbunden zu werden, einen von seiner der Bodenschiene 4 zuzuwendenden Unterseite abgehenden hakenförmigen Fortsatz 61 aufweist, welcher einen sich vom Stützelement senkrecht nach unten erstreckenden vertikalen Schenkel 611 und einen sich daran anschließenden, in Längsrichtung der Bodenschiene 4 verlaufenden horizontalen Schenkel 612 umfasst, und
- dass die Bodenschiene 4 und das Stützelement 6, 8 ferner so ausgebildet sind, dass die Zunge 43 durch den hakenförmigen Fortsatz 61 elastisch in die Bodenschiene 4 hineindrückbar ist und nach einem sich daran anschließenden Verschieben des Stützelements 6, 8 in seine bestimmungsgemäße Relativlage in Bezug zur Bodenschiene 4 zurückspringt.

Im betrachteten Beispiel kommt das freie Ende der Zunge 43 in einer auf der Oberseite der Bodenschiene 4 vorgesehenen Aussparung 41 zu liegen. Die Zunge 43 beginnt aber schon außerhalb der Aussparung, genauer gesagt an den von der Aussparung 41 abgewandten Enden der Einschnitte 42.

Die Aussparung 41 ist so bemessen, dass der hakenförmige Fortsatz 61 des Stützelements 6, 8 von oben her in diese einführbar ist. Vorzugsweise ist die Aussparung 41 nur geringfügig größer als der horizontale Schenkel 612 des hakenförmigen Fortsatzes 61.

In der bestimmungsgemäßen Relativlage von Bodenschiene 4 und Stützelement 6, 8 kommt der vertikale Schenkel 611 des hakenförmigen Fortsatzes 61 des Stützelements 6, 8 zwischen dem freien Ende der Zunge 43 und dem gegenüberliegenden Randabschnitt der Aussparung 41 zu liegen.

Der Abstand zwischen dem horizontalen Schenkel 612 des hakenförmigen Fortsatzes 61 des Stützelements 6, 8 und der Unterseite des Stützelements entspricht vorzugsweise der Dicke der Oberseite der Bodenschiene 4. Der horizontale Schenkel 612 des hakenförmigen Fortsatzes 61 des Stützelements 6, 8 kommt in der bestimmungsgemäßen Relativlage von Bodenschiene 4 und Stützelement 6, 8 unterhalb des an das freie Ende der Zunge 43 angrenzenden Abschnitts der Oberseite der Bodenschiene 4 zu liegen.

Vorzugsweise ist der horizontale Schenkel 612 des hakenförmigen Fortsatzes 61 des Stützelements 6, 8 im Bereich seines freien Endes so ausgebildet, dass in diesem Bereich ein sich zum freien Ende hin vergrößernder Abstand zwischen dem horizontalen Schenkel 612 und der Unterseite des Stützelements 6, 8 vorhanden ist. Dies wird im betrachteten Beispiel durch Ausbildung einer zum freien Ende des Fortsatzes 61 hin abfallende Schräge 613 auf der der Unterseite des Stützelements zugewandten Seite des Fortsatzes 61 erreicht.

Der hakenförmige Fortsatz 61 erstreckt sich im betrachteten Beispiel über die gesamte Breite des Stützelements, 6, 8. Die Breite des hakenförmigen Fortsatzes 61 könnte aber auch geringer sein. Die Breite des Stützelements 6, 8 ist kleiner als die Breite der Bodenschiene 4.

Die Bodenschiene 4 und das Stützelement 6, 8 sind so ausgebildet, dass sie durch
- ein Anordnen des hakenförmigen Fortsatzes 61 über der Aussparung 41,
- eine sich daran anschließende vertikale Bewegung, genauer gesagt ein Niederdrücken des Stützelements 6, 8 bis zum Anschlag, und
- eine sich daran anschließende horizontale Bewegung des Stützelements bis zum Anschlag
in ihre bestimmungsgemäße Relativlage bringbar sind.

Durch die vertikale Bewegung (das Niederdrücken) des Stützelements 6, 8 gelangt der hakenförmige Fortsatz 61 in die Aussparung 41 hinein und drückt einhergehend damit die Zunge 43 in die Bodenschiene 4 hinein. Wie erwähnt springt die Zunge 43 bei Erreichen der bestimmungsgemäße Relativlage von Stützelement 6, 8 und Bodenschiene 4 wieder zurück nach oben.

Die Bodenschiene 4 und das Stützelement 6, 8 sind vorzugsweise so ausgebildet, dass die während der Montage des Stützelements 6, 8 an der Bodenschiene 4 elastisch in die Bodenschiene hineingedrückte Zunge 43 erst dann zurück nach oben springen kann, wenn die Bodenschiene und das Stützelement ihre bestimmungsgemäße Relativlage erreicht haben.

Die Bodenschiene und das Stützelement sind außerdem so ausgebildet, dass diese durch die zurück nach oben gesprungene Zunge 43 in ihrer bestimmungsgemäßen Relativlage gehalten, und Relativbewegungen zwischen der Bodenschiene 4 und dem Stützelement 6, 8 verhindert werden.

Im betrachteten Beispiel weist das Stützelement 6, 8 einen von seiner der Bodenschiene 4 zuzuwendenden Unterseite abgehenden zusätzlichen zweiten hakenförmigen Fortsatz 62 auf, welcher einen sich vom Stützelement senkrecht nach unten erstreckenden vertikalen Schenkel 621 und einen sich daran anschließenden, in Längsrichtung der Bodenschiene 4 verlaufenden horizontalen Schenkel 622 umfasst. Die Bodenschiene 4 weist an ihrer Oberseite eine zugeordnete zweite Aussparung 44 auf, über welche der zweite hakenförmige Fortsatz 62 des Stützelements 6, 8 von oben her in die Bodenschiene einführbar ist.

Die Länge und die Breite der zweiten Aussparung 44 entsprechen im Wesentlichen der Länge und der Breite des horizontalen Schenkels 622 des zweiten hakenförmigen Fortsatzes 62.

Der zweite hakenförmige Fortsatz 62 und die diesem zugeordnete zweite Aussparung 44 entsprechen im Wesentlichen dem ersten hakenförmigen Fortsatz 61 und der diesem zugeordneten zweiten Aussparung 41, und zwar sowohl in Bezug auf den Aufbau und die Ausrichtung, als auch in Bezug auf die Größe. In die zweite Aussparung 44 ragt jedoch keine zweite Zunge hinein.

Die Aussparungen 41, 44 der Bodenschiene 4 sind so angeordnet, dass die hakenförmigen Fortsätze 61, 62 des Stützelements 6, 8 beim bestimmungsgemäßen Zusammenbau der Stützelemente 6, 8 und der Bodenschiene 4 gleichzeitig in die jeweils zugeordneten Aussparungen 41, 44 gelangen.

Der Abstand zwischen dem horizontalen Schenkel 622 des zweiten hakenförmigen Fortsatzes 62 des Stützelements 6, 8 und der Unterseite des Stützelements entspricht der Dicke der Oberseite der Bodenschiene 4. Der horizontale Schenkel 622 des zweiten hakenförmigen Fortsatzes 62 des Stützelements 6, 8 kommt in der bestimmungsgemäßen Relativlage von Bodenschiene 4 und Stützelement 6, 8 daher unterhalb des an die zweite Aussparung 44 angrenzenden Abschnitts der Oberseite der Bodenschiene zu liegen.

Der horizontale Schenkel 622 des zweiten hakenförmigen Fortsatzes 62 des Stützelements ist im Bereich seines freien Endes vorzugsweise so ausgebildet, dass in diesem Bereich ein sich zum freien Ende hin vergrößernder Abstand zwischen dem horizontalen Schenkel und der Unterseite des Stützelements vorhanden ist. Dies kann wie beim ersten hakenförmigen Fortsatz 61 durch eine entsprechend angeordnete Schräge an der der Unterseite des Stützelements 6, 8 zugewandten Seite des horizontalen Schenkels 622 erreicht werden.

Außerdem ist die Unterseite des Stützelements in dem dem freien Ende des horizontalen Schenkels 622 des zweiten hakenförmigen Fortsatzes 62 gegenüberliegenden Bereich nach oben gewölbt. Die Wölbung ist mit dem Bezugszeichen 63 bezeichnet.

Unter Umständen kann es sich als vorteilhaft erweisen, wenn auch eine in die zweiten Aussparung 44 hineinragende zweite Zunge vorgesehen wird.

Andererseits kann auf den zweiten hakenförmigen Fortsatz 62 und die zweite Aussparung 44 eventuell auch verzichtet werden, sodass die Verbindung zwischen Stützelement 6, 8 und Bodenschiene 4 ausschließlich durch den ersten hakenförmigen Fortsatz 61 und die Zunge 43 hergestellt wird.

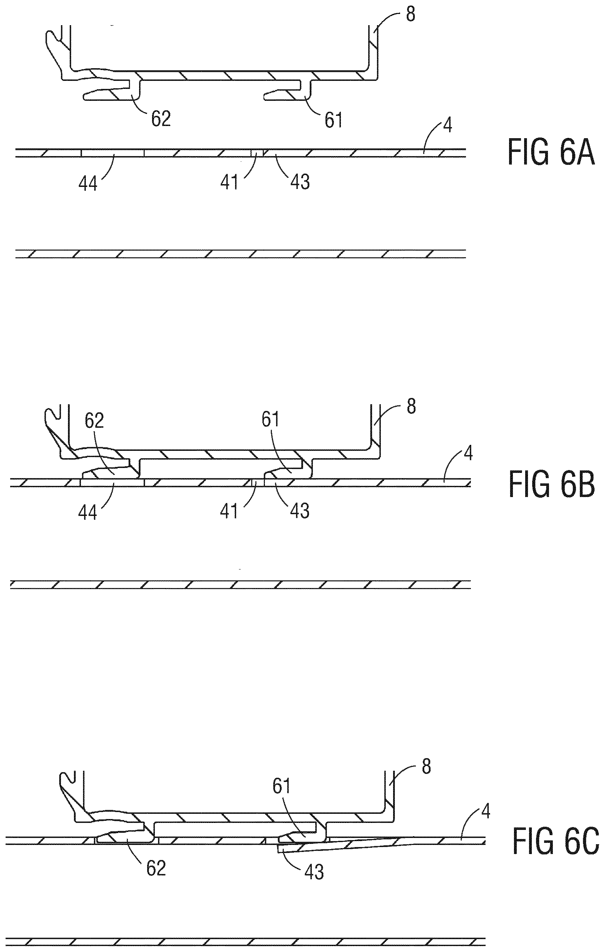

In den Figuren 6A bis 6F ist veranschaulicht, wie das Stützelement 8 mit der Bodenschiene 4 verbindbar ist. Da die an der Verbindung beteiligten Abschnitte des Stützelements 8 identisch auch beim Stützelement 6 vorgesehen sind, lassen sich die Stützelemente 6, 8 auf genau dieselbe Art und Weise mit der Bodenschiene 4 verbinden.

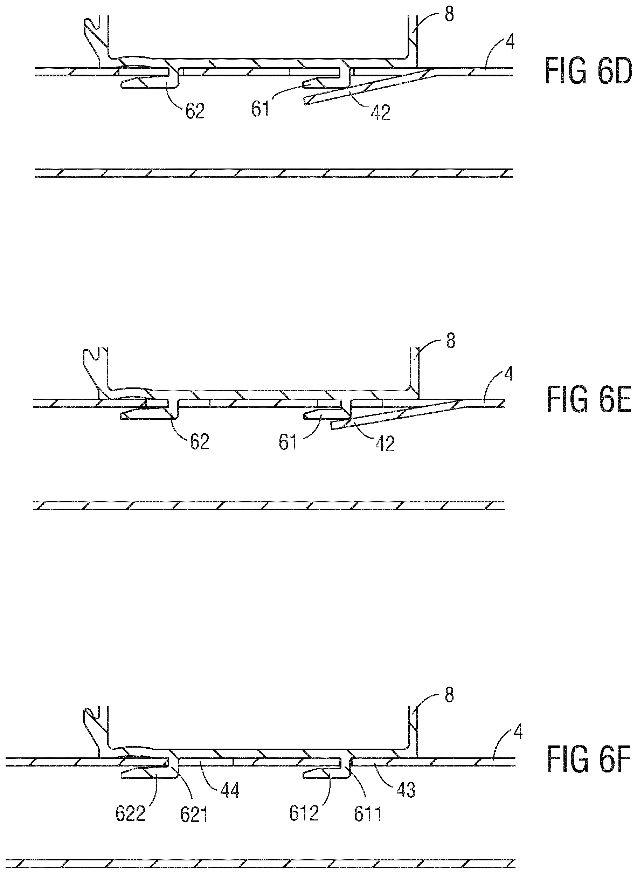

Die Figur 6A zeigt das Stützelement 8 und die Bodenschiene 4 in einem vor der Verbindungsherstellung befindlichen, voneinander getrennten Zustand. Die Figur 6F zeigt das Stützelement 8 und die Bodenschiene 4 im bestimmungsgemäß miteinander verbundenen Zustand. Die Figuren 6B bis 6E zeigen verschiedene Stadien der Herstellung der in der Figur 6F gezeigten Verbindung.

Zunächst wird das Stützelement 8 so auf die Bodenschiene 4 aufgesetzt, dass der erste hakenförmige Fortsatz 61 des Stützelements 8 über der ersten Aussparung 41 der Bodenschiene 4 zu liegen kommt, und der zweite hakenförmige Fortsatz 62 des Stützelements 8 über der zweiten Aussparung 44 der Bodenschiene 4 zu liegen kommt. In diesem Zustand befindet sich automatisch der erste hakenförmige Fortsatz 61 des Stützelements 8 über dem freien Ende der Zunge 43 der Bodenschiene 4. Dies ist in Figur 6B veranschaulicht.

Sodann wird das Stützelement 8 vertikal nach unten gedrückt. Dabei gelangen beide hakenförmigen Fortsätze 61, 62 in die jeweils zugeordneten Aussparungen 41, 44 hinein, und drückt der erste hakenförmige Fortsatz 61 die Zunge 43 nach unten in die Bodenschiene 4 hinein. Dies ist in Figur 6C veranschaulicht.

Das Stützelement 8 wird bis zum Anschlag, genauer gesagt bis zum Anschlagen der Unterseite des Stützelements 8 an der Oberseite der Bodenschiene 4 nach unten gedrückt. Dies ist in Figur 6D veranschaulicht.

Anschließend wird das Stützelement 8 horizontal in Längsrichtung der Bodenschiene 4, genauer gesagt in Richtung freies Ende der hakenförmigen Fortsätze 61, 62 verschoben. Dabei gelangen die horizontalen Schenkel 612, 622 der hakenförmigen Fortsätze 61, 62 unter die Oberseite der Bodenschiene 4, sodass also die Oberseite der Bodenschiene 4 zwischen der Unterseite des Stützelements 8 und den horizontalen Schenkeln 612, 622 der hakenförmigen Fortsätze 61, 62 zu liegen kommt / eingeklemmt wird. Dies ist in Figur 6E veranschaulicht.

Das Stützelement wird bis zum Anschlag horizontal verschoben, genauer gesagt bis zum Anschlagen der vertikalen Schenkel 611, 621 der hakenförmigen Fortsätze 61, 62 an der Oberseite der Bodenschiene 4. Diese Lage ist die bestimmungsgemäße Relativlage von Stützelement 8 und Bodenschiene 4. In dieser Relativlage ist der erste hakenförmige Fortsatz 61 des Stützelements 8 von der Zunge 43 heruntergerutscht, sodass die elastische Zunge 43 wieder zurück nach oben springen kann. Die zurückgesprungene Zunge 43 fixiert das Stützelement 8 und die Bodenschiene 4 im verbundenen Zustand und verhindert eine unbeabsichtigte Trennung derselben. Dieser bestimmungsgemäße Endzustand ist in der Figur 6F veranschaulicht.

Es dürfte einleuchten und bedarf keiner näheren Erläuterung, dass die Stützelemente 6, 8 und die Bodenschiene 4 mannigfaltig modifizierbar sind. Insbesondere sind sie frei an die Photovoltaikanlagen-Komponenten anpassbar, die sie zu tragen haben, wobei solche und auch aus anderen Gründen vorgenommene Anpassungen auch Modifikationen der an der Verbindung beteiligten Abschnitte der Stützelemente 6, 8 und Bodenschiene 4 umfassen können.

Die Stützelemente 6, 8 und die Bodenschienen 4 erweisen sich unabhängig von den Einzelheiten der praktischen Realisierung in mehrfacher Hinsicht als sehr vorteilhaft. Erstens sind sie durch eine besonders schnell und einfach herzustellende Rastverbindung bestimmungsgemäß in Verbindung bringbar. Zweitens sind die an der Verbindung beteiligten Abschnitte der Stützelemente 6, 8 und die Bodenschienen 4 denkbar einfach aufgebaut und entsprechend einfach herstellbar. Drittens lassen sich auch ungenau gefertigte und/oder verformte Stützelemente und Bodenschienen bestimmungsgemäß miteinander verbinden. Und viertens lässt sich bei entsprechend langer Ausbildung der Zunge 43 optisch kontrollieren, ob diese nach oben zurückgesprungen (eingerastet) ist.

### Bezugszeichenliste

- 1: Photovoltaikmodul
- 2: Rahmen von 1
- 3: Schutzmatte oder Schutzmatten-Streifen
- 4: Bodenschiene
- 5: erstes Stützelement (niedrig)
- 6: zweites Stützelement (hoch)
- 7: Querstrebe
- 8: drittes Stützelement (für Windschutzblech)
- 9: Windschutzblech

- 41: erste Aussparung in 4
- 42: Einschnitte in 4
- 43: Zunge
- 44: zweite Aussparung in 4

- 61: erster hakenförmiger Fortsatz an 6, 8
- 611: vertikaler Schenkel von 61
- 612: horizontaler Schenkel von 61
- 613: Schräge

- 62: zweiter hakenförmiger Fortsatz an 6, 8
- 621: vertikaler Schenkel von 62
- 622: horizontaler Schenkel von 62

- 63: Wölbung

## Patentansprüche

1. Montagesystem zur Montage von Photovoltaikmodulen (1) auf Dächern, insbesondere auf Flachdächern, mit
- direkt auf dem Dach oder einer darauf aufgelegten Schutzmatte (3) anzuordnenden, durch Hohlkammerprofile gebildeten Bodenschienen (4), und
- auf den Bodenschienen montierbaren Stützelementen (5, 6, 8), an welchen die Photovoltaikmodule und/oder sonstige Photovoltaikanlagen-Komponenten (9) anbringbar sind,
wobei die Stützelemente zumindest teilweise über Rastverbindungen mit den Bodenschienen verbindbar sind,
**dadurch gekennzeichnet,**
- **dass** die Bodenschienen zumindest teilweise an ihrer Oberseite eine durch Einschnitte (42) in der Oberseite gebildete Zunge (43) aufweisen, deren freies Ende elastisch in die Bodenschiene hineindrückbar ist,
- **dass** ein Stützelement (6, 8), das dazu ausgelegt ist, mit einer solchen Bodenschiene über eine unter Mitwirkung der elastischen Zunge erfolgende Rastverbindung verbunden zu werden, einen von seiner der Bodenschiene zuzuwendenden Unterseite abgehenden hakenförmigen Fortsatz (61) aufweist, welcher einen sich vom Stützelement senkrecht nach unten erstreckenden vertikalen Schenkel (611) und einen sich daran anschließenden, in Längsrichtung der Bodenschiene verlaufenden horizontalen Schenkel (612) umfasst, und
- **dass** die Bodenschiene und das Stützelement ferner so ausgebildet sind, dass die Zunge durch den hakenförmigen Fortsatz elastisch in die Bodenschiene hineindrückbar ist und nach einem sich daran anschließenden Verschieben des Stützelements in seine bestimmungsgemäße Relativlage in Bezug zur Bodenschiene zurückspringt.

2. Montagesystem nach Anspruch 1, **dadurch gekennzeichnet, dass** das freie Ende der Zunge (43) in einer auf der Oberseite der Bodenschiene (4) vorgesehenen Aussparung (41) zu liegen kommt, die Zunge aber schon außerhalb der Aussparung beginnt.

3. Montagesystem nach Anspruch 1 oder 2, **dadurch gekennzeichnet, dass** die Aussparung (41) so ausgebildet ist, dass der hakenförmige Fortsatz (61) des Stützelements (6, 8) von oben her in diese einführbar ist und einhergehend damit die Zunge (43) nach unten drückt.

4. Montagesystem nach einem der vorhergehenden Ansprüche, **dadurch gekennzeichnet, dass** die Bodenschiene (4) und das Stützelement (6, 8) so ausgebildet sind, dass der vertikale Schenkel (611) des hakenförmigen Fortsatzes (61) des Stützelements in der bestimmungsgemäßen Relativlage von Bodenschiene und Stützelement zwischen dem freien Ende der Zunge (43) und dem gegenüberliegenden Randabschnitt der Aussparung (41) zu liegen kommt.

5. Montagesystem nach einem der vorhergehenden Ansprüche, **dadurch gekennzeichnet, dass** der horizontale Schenkel (612) des hakenförmigen Fortsatzes (61) des Stützelements (6, 8) in der bestimmungsgemäßen Relativlage von Bodenschiene (4) und Stützelement unterhalb des an das freie Ende der Zunge (43) angrenzenden Abschnitts der Oberseite der Bodenschiene zu liegen kommt.

6. Montagesystem nach einem der vorhergehenden Ansprüche, **dadurch gekennzeichnet, dass** der horizontale Schenkel (612) des hakenförmigen Fortsatzes (61) des Stützelements (6, 8) im Bereich seines freien Endes so ausgebildet ist, dass in diesem Bereich ein sich zum freien Ende hin vergrößernder Abstand zwischen dem horizontalen Schenkel und der Unterseite des Stützelements vorhanden ist.

7. Montagesystem nach einem der vorhergehenden Ansprüche, **dadurch gekennzeichnet, dass** die Bodenschiene (4) und das Stützelement (6, 8) so ausgebildet sind, dass die während der Montage des Stützelements an der Bodenschiene elastisch in die Bodenschiene hineingedrückte Zunge (43) erst dann zurück nach oben springen kann, wenn die Bodenschiene und das Stützelement ihre bestimmungsgemäße Relativlage erreicht haben.

8. Montagesystem nach einem der vorhergehenden Ansprüche, **dadurch gekennzeichnet, dass** die Bodenschiene (4) und das Stützelement (6, 8) so ausgebildet sind, dass diese durch die zurück nach oben gesprungene Zunge (43) in ihrer bestimmungsgemäßen Relativlage gehalten werden.

9. Montagesystem nach einem der vorhergehenden Ansprüche, **dadurch gekennzeichnet, dass** die Bodenschiene (4) und das Stützelement (6, 8) so ausgebildet sind, dass sie durch ein Aufsetzen des hakenförmigen Fortsatzes (61) auf die Zunge (43), eine sich daran anschließende vertikale Bewegung des Stützelements bis zum Anschlag nach unten, und eine sich daran anschließende horizontale Bewegung des Stützelements bis zum Anschlag in Richtung freies Ende des horizontalen Schenkels (612) des hakenförmigen Fortsatzes (61) in ihre bestimmungsgemäße Relativlage bringbar sind.

10. Montagesystem nach einem der vorhergehenden Ansprüche, **dadurch gekennzeichnet, dass** das Stützelement (6, 8) einen von seiner der Bodenschiene (4) zuzuwendenden Unterseite abgehenden zweiten hakenförmigen Fortsatz (62) aufweist, welcher einen sich vom Stützelement senkrecht nach unten erstreckenden vertikalen Schenkel (621) und einen sich daran anschließenden, in Längsrichtung der Bodenschiene verlaufenden horizontalen Schenkel (622) umfasst.

11. Montagesystem nach Anspruch 10, **dadurch gekennzeichnet, dass** die Bodenschiene (4) an ihrer Oberseite eine zweite Aussparung (44) aufweist, über welche der zweite hakenförmige Fortsatz (62) des Stützelements (6, 8) von oben her in die Bodenschiene einführbar ist.

12. Montagesystem nach Anspruch 11, **dadurch gekennzeichnet, dass** die zweite Aussparung (44) der Bodenschiene (4) so angeordnet ist, dass der zweite hakenförmige Fortsatz (62) des Stützelements beim bestimmungsgemäßen Niederdrücken der Zunge (43) durch den ersten hakenförmige Fortsatz (61) automatisch in die zweite Aussparung der Bodenschiene gelangt.

13. Montagesystem nach Anspruch 11 oder 12, **dadurch gekennzeichnet, dass** der horizontale Schenkel (622) des zweiten hakenförmigen Fortsatzes (62) des Stützelements (6, 8) in der bestimmungsgemäßen Relativlage von Bodenschiene (4) und Stützelement unterhalb des an die zweite Aussparung (44) angrenzenden Abschnitts der Oberseite der Bodenschiene zu liegen kommt.

14. Montagesystem nach einem der Ansprüche 10 bis 13, **dadurch gekennzeichnet, dass** der horizontale Schenkel (622) des zweiten hakenförmigen Fortsatzes (62) des Stützelements (6, 8) im Bereich seines freien Endes so ausgebildet ist, dass in diesem Bereich ein sich zum freien Ende hin vergrößernder Abstand zwischen dem horizontalen Schenkel und der Unterseite des Stützelements vorhanden ist.

15. Montagesystem nach einem der Ansprüche 10 bis 14, **dadurch gekennzeichnet, dass** die Unterseite des Stützelements (6, 8) in dem dem freien Ende des horizontalen Schenkels (622) des zweiten hakenförmigen Fortsatzes (62) gegenüberliegenden Bereich nach oben gewölbt ist.

## Claims

1. Mounting system for mounting photovoltaic modules (1) on roofs, in particular on flat roofs, having
- base rails (4) which are to be arranged directly on the roof or on a protective mat (3) placed thereon and which are formed by hollow-chamber profiles, and
- support elements (5, 6, 8) which can be mounted on the base rails and to which the photovoltaic modules and/or other photovoltaic installation components (9) can be attached,
wherein the support elements can be at least partially connected to the base rails via latching connections,
**characterized**
- **in that** the base rails at least partially have on their upper side a tongue (43) which is formed by incisions (42) in the upper side and whose free end can be pressed elastically into the base rail,
- **in that** a support element (6, 8), which is designed to be connected to such a base rail via a latching connection resulting from interaction with the elastic tongue, has a hook-shaped projection (61) which emanates from its underside which is to face the base rail, which projection comprises a vertical leg (611) extending vertically downwards from the support element and an adjoining horizontal leg (612) which runs in the longitudinal direction of the base rail, and
- **in that** the base rail and the support element are also formed in such a way that the tongue can be pressed elastically into the base rail via the hook-shaped projection and springs back after a subsequent displacement of the support element into its intended relative position with respect to the base rail.

2. Mounting system according to Claim 1, **characterized in that** the free end of the tongue (43) comes to lie in a cutout (41) provided on the upper side of the base rail (4), but the tongue already starts outside of the cutout.

3. Mounting system according to Claim 1 or 2, **characterized in that** the cutout (41) is formed in such a way that the hook-shaped projection (61) of the support element (6, 8) can be introduced into it from above and, in association therewith, presses the tongue (43) downwards.

4. Mounting system according to one of the preceding claims, **characterized in that** the base rail (4) and the support element (6, 8) are formed in such a way that, in the intended relative position of the base rail and support element, the vertical leg (611) of the hook-shaped projection (61) of the support element comes to lie between the free end of the tongue (43) and the opposite edge portion of the cutout (41).

5. Mounting system according to one of the preceding claims, **characterized in that**, in the intended relative position of the base rail (4) and support element, the horizontal leg (612) of the hook-shaped projection (61) of the support element (6, 8) comes to lie below the portion of the upper side of the base rail that adjoins the free end of the tongue (43).

6. Mounting system according to one of the preceding claims, **characterized in that**, in the region of its free end, the horizontal leg (612) of the hook-shaped projection (61) of the support element (6, 8) is formed in such a way that in this region there is an increasing distance towards the free end between the horizontal leg and the underside of the support element.

7. Mounting system according to one of the preceding claims, **characterized in that** the base rail (4) and the support element (6, 8) are formed in such a way that the tongue (43), which is pressed elastically into the base rail during mounting of the support element on the base rail, can spring back upwards only when the base rail and the support element have reached their intended relative position.

8. Mounting system according to one of the preceding claims, **characterized in that** the base rail (4) and the support element (6, 8) are formed in such a way that they are held in their intended relative position by the tongue (43) which has sprung back upwards.

9. Mounting system according to one of the preceding claims, **characterized in that** the base rail (4) and the support element (6, 8) are formed in such a way that they can be brought into their intended relative position by placing the hook-shaped projection (61) on the tongue (43), by a subsequent vertical movement of the support element until it comes to a stop in the downward direction, and by a subsequent horizontal movement of the support element until it comes to a stop in the direction of the free end of the horizontal leg (612) of the hook-shaped projection (61).

10. Mounting system according to one of the preceding claims, **characterized in that** the support element (6, 8) has a second hook-shaped projection (62) which emanates from its underside which is to face the base rail (4), which projection comprises a vertical leg (621) extending vertically downwards from the support element and an adjoining horizontal leg (622) running in the longitudinal direction of the base rail.

11. Mounting system according to Claim 10, **characterized in that** the base rail (4) has on its upper side a second cutout (44) via which the second hook-shaped projection (62) of the support element (6, 8) can be introduced into the base rail from above.

12. Mounting system according to Claim 11, **characterized in that** the second cutout (44) of the base rail (4) is arranged in such a way that, when the tongue (43) is pressed down as intended by the first hook-shaped projection (61), the second hook-shaped projection (62) of the support element passes automatically into the second cutout of the base rail.

13. Mounting system according to Claim 11 or 12, **characterized in that**, in the intended relative position of the base rail (4) and support element, the horizontal leg (622) of the second hook-shaped projection (62) of the support element (6, 8) comes to lie below the portion of the upper side of the base rail that adjoins the second cutout (44) .

14. Mounting system according to one of Claims 10 to 13, **characterized in that**, in the region of its free end, the horizontal leg (622) of the second hook-shaped projection (62) of the support element (6, 8) is formed in such a way that in this region there is an increasing distance towards the free end between the horizontal leg and the underside of the support element.

15. Mounting system according to one of Claims 10 to 14, **characterized in that** the underside of the support element (6, 8) is curved upwards in the region opposite to the free end of the horizontal leg (622) of the second hook-shaped projection (62).

## Revendications

1. Système de montage pour monter des modules photovoltaïques (1) sur des toits, en particulier sur des toits plats, comportant
- des rails de base (4) formés par des profilés à chambres creuses, devant être disposés directement sur le toit ou sur un mat de protection (3) placé sur celui-ci, et
- des éléments de support (5, 6, 8) pouvant être montés sur les rails de base, éléments de support auxquels les modules photovoltaïques et/ou d'autres composants de modules photovoltaïques (9) peuvent être fixés,
les éléments de support pouvant être reliés aux rails de base au moins partiellement par le biais de liaisons par encliquetage,
**caractérisé**
- **en ce que** les rails de base présentent, au moins partiellement au niveau de leur côté supérieur, une languette (43) formée par des entailles (42) dans le côté supérieur, languette dont l'extrémité libre peut être enfoncée de manière élastique dans le rail de base,
- **en ce qu'**un élément de support (6, 8), qui est conçu pour être relié à un tel rail de base par le biais d'une liaison par encliquetage s'effectuant à l'aide de la languette élastique, présente une saillie (61) en forme de crochet partant de son côté inférieur devant être tourné vers le rail de base, laquelle saillie comprend une branche (611) verticale s'étendant vers le bas perpendiculairement à partir de l'élément de support et une branche (612) horizontale s'y raccordant, s'étendant dans la direction longitudinale du rail de base, et
- **en ce que** le rail de base et l'élément de support sont en outre réalisés de telle sorte que la languette peut être enfoncée par la saillie en forme de crochet de manière élastique dans le rail de base et revient élastiquement à sa position relative correcte par rapport au rail de base après un déplacement subséquent de l'élément de support.

2. Système de montage selon la revendication 1, **caractérisé en ce que** l'extrémité libre de la languette (43) vient se situer dans un évidement (41) prévu sur le côté supérieur du rail de base (4), mais la languette commence déjà à l'extérieur de l'évidement.

3. Système de montage selon la revendication 1 ou 2, **caractérisé en ce que** l'évidement (41) est réalisé de telle sorte que la saillie (61) en forme de crochet de l'élément de support (6, 8) peut être insérée dans celui-ci par le haut et, de manière concomitante, presse la languette (43) vers le bas.

4. Système de montage selon l'une des revendications précédentes, **caractérisé en ce que** le rail de base (4) et l'élément de support (6, 8) sont réalisés de telle sorte que la branche (611) verticale de la saillie (61) en forme de crochet de l'élément de support vient se situer entre l'extrémité libre de la languette (43) et la partie de bord opposée de l'évidement (41) dans la position relative correcte du rail de base et de l'élément de support.

5. Système de montage selon l'une des revendications précédentes, **caractérisé en ce que** la branche (612) horizontale de la saillie (61) en forme de crochet de l'élément de support (6, 8) vient se situer en dessous de la partie du côté supérieur du rail de base adjacente à l'extrémité libre de la languette (43) dans la position relative correcte du rail de base (4) et de l'élément de support.

6. Système de montage selon l'une des revendications précédentes, **caractérisé en ce que** la branche (612) horizontale de la saillie (61) en forme de crochet de l'élément de support (6, 8) est réalisée dans la région de son extrémité libre de telle sorte que, dans cette région, une distance, augmentant vers l'extrémité libre, entre la branche horizontale et le côté inférieur de l'élément de support est présente.

7. Système de montage selon l'une des revendications précédentes, **caractérisé en ce que** le rail de base (4) et l'élément de support (6, 8) sont réalisés de telle sorte que la languette (43) enfoncée dans le rail de base pendant le montage de l'élément de support sur le rail de base ne peut revenir élastiquement vers le haut que lorsque le rail de base et l'élément de support ont atteint leur position relative correcte.

8. Système de montage selon l'une des revendications précédentes, **caractérisé en ce que** le rail de base (4) et l'élément de support (6, 8) sont réalisés de telle sorte que ceux-ci sont maintenus dans leur position relative correcte par le biais de la languette (43) revenue élastiquement vers le haut.

9. Système de montage selon l'une des revendications précédentes, **caractérisé en ce que** le rail de base (4) et l'élément de support (6, 8) sont réalisés de telle sorte qu'ils peuvent être amenés à leur position relative correcte par un placement de la saillie (61) en forme de crochet sur la languette (43), un mouvement vertical subséquent de l'élément de support jusqu'à venir en butée vers le bas, et un mouvement horizontal subséquent de l'élément de support jusqu'à venir en butée en direction de l'extrémité libre de la branche (612) horizontale de la saillie (61) en forme de crochet.

10. Système de montage selon l'une des revendications précédentes, **caractérisé en ce que** l'élément de support (6, 8) présente une deuxième saillie (62) en forme de crochet partant de son côté inférieur devant être tourné vers le rail de base (4), laquelle saillie comprend une première branche (621) verticale s'étendant vers le bas perpendiculairement à partir de l'élément de support et une branche (622) horizontale s'y raccordant, s'étendant dans la direction longitudinale du rail de base.

11. Système de montage selon la revendication 10, **caractérisé en ce que** le rail de base (4) présente, sur son côté supérieur, un deuxième évidement (44) par le biais duquel la deuxième saillie (62) en forme de crochet de l'élément de support (6, 8) peut être insérée par le haut dans le rail de base.

12. Système de montage selon la revendication 11, **caractérisé en ce que** le deuxième évidement (44) du rail de base (4) est disposé de telle sorte que la deuxième saillie (62) en forme de crochet de l'élément de support parvient automatiquement dans le deuxième évidement du rail de base en cas d'enfoncement correct de la languette (43) par le biais de la première saillie (61) en forme de crochet.

13. Système de montage selon la revendication 11 ou 12, **caractérisé en ce que** la branche (622) horizontale de la deuxième saillie (62) en forme de crochet de l'élément de support (6, 8) vient se situer en dessous de la partie du côté supérieur du rail de base adjacente au deuxième évidement (44) dans la position relative correcte du rail de base (4) et de l'élément de support.

14. Système de montage selon l'une des revendications 10 à 13, **caractérisé en ce que** la branche (622) horizontale de la deuxième saillie (62) en forme de crochet de l'élément de support (6, 8) est réalisée dans la région de son extrémité libre de telle sorte que, dans cette région, une distance, augmentant vers l'extrémité libre, entre la branche horizontale et le côté inférieur de l'élément de support est présente.

15. Système de montage selon l'une des revendications 10 à 14, **caractérisé en ce que** le côté inférieur de l'élément de support (6, 8) est bombé vers le haut dans la région en regard de l'extrémité libre de la branche (622) horizontale de la deuxième saillie (62) en forme de crochet.
